# EUROPÄISCHE PATENTSCHRIFT

(11) **EP 3 426 458 B1**
(45) Veröffentlichungstag und Bekanntmachung des Hinweises auf die Patenterteilung: **06.05.2020**
(21) Anmeldenummer: 17708790.5
(22) Anmeldetag: 06.03.2017
(51) Int. Cl.: B29C 45/14, B62D 1/185, B62D 1/20, F16D 3/06

(54) **VERFAHREN ZUR HERSTELLUNG EINER LÄNGENVERÄNDERBAREN LENKWELLE UND SPRITZGIESSVORRICHTUNG ZUR DURCHFÜHRUNG DES VERFAHRENS**
METHOD FOR PRODUCING A VARIABLE LENGTH STEERING SHAFT AND INJECTION MOLDING DEVICE FOR CARRYING OUT THE METHOD
PROCÉDÉ DE RÉALISATION D'UN ARBRE DE DIRECTION DE LONGUEUR VARIABLE ET DISPOSITIF DE MOULAGE PAR INJECTION POUR METTRE EN UVRE LE PROCÉDÉ

(30) Priorität: 07.03.2016 DE 102016203625
(43) Veröffentlichungstag der Anmeldung: 16.01.2019
(73) Patentinhaber: thyssenkrupp Presta AG, 9492 Eschen (LI); thyssenkrupp AG, 45143 Essen (DE)
(72) Erfinder: BREUER, Marius, 48307 Rochester Hills, Michigan (US); DUROT, Janick, 9443 Widnau (CH); JÄGER, Bernhard, 88239 Wangen im Allgäu (DE)
(74) Vertreter: thyssenkrupp Intellectual Property GmbH
(86) Internationale Anmeldenummer: PCT/EP2017/055122
(87) Internationale Veröffentlichungsnummer: WO 2017/153306

(56) Entgegenhaltungen:
- EP-A1- 1 752 670
- JP-A- 2008 222 016

## Beschreibung

### Stand der Technik

Die vorliegende Erfindung betrifft ein Verfahren zur Herstellung einer längenveränderbaren Lenkwelle, umfassend eine Hohlwelle mit einer Innenverzahnung, in der in axialer Richtung teleskopierbar eine formschlüssig eingreifende Zahnwelle angeordnet ist, die einen Verzahnungsbereich mit auf dem Außenumfang angeordneten, sich in axialer Richtung erstreckenden Zähnen aufweist, wobei im Verzahnungsbereich ein Wellenkern im Spritzgussverfahren mit einer Gleitbeschichtung aus thermoplastischem Kunststoff umspritzt wird, mit den Schritten
- Positionieren des Wellenkerns innerhalb eines Formhohlraums eines Spritzgießwerkzeugs koaxial zu einer den Verzahnungsbereich begrenzenden Formfläche,
- Einspritzen von schmelzflüssigem Kunststoff in den Formhohlraum zwischen dem Wellenkern und der Formfläche des Formhohlraums,
- Entnehmen der Zahnwelle aus dem Spritzgießwerkzeug nach dem Erstarren des Kunststoffs,
- Bereitstellen der Hohlwelle und axiales Einführen des Verzahnungsbereichs in die Innenverzahnung.

Eine Spritzgießvorrichtung zur Durchführung des Verfahrens ist ebenfalls Gegenstand der Erfindung.

Aus der DE 10 2014 105 822 A1 ist eine teleskopierbare Lenkwelle bekannt, die in der Lenkung eines Kraftfahrzeugs zur Übertragung des Lenkmoments vom Lenkrad zum Lenkgetriebe dient. Um eine Verstellung des Lenkrads relativ zur Fahrerposition in Längsrichtung, d.h. in Richtung der Längsachse zu ermöglichen, ist zumindest ein Wellenabschnitt zwischen dem Lenkrad und dem Lenkgetriebe teleskopierbar und damit längenverstellbar ausgestaltet. Der längenverstellbare Wellenabschnitt kann die fahrerseitige Lenkspindel bilden oder die Lenkzwischenwelle zwischen der Lenkspindel und dem Lenkgetriebe.

Die Lenkwelle ist teleskopartig aufgebaut, mit einem als Hohlwelle ausgebildeten ersten Wellenteil mit einer Innenverzahnung, die sich in axialer Richtung erstreckende Zähne aufweist, und einem in diesem teleskopierbaren, als Zahnwelle ausgebildeten zweiten Wellenteil mit einer Außenverzahnung, welche zur Drehmomentübertragung formschlüssig in die besagte Innenverzahnung eingreift und eine teleskopartige, axiale Verstellung der beiden Wellenteile relativ zueinander ermöglicht.

Um das Verdrehspiel zu minimieren und das Gleitverhalten beim Teleskopieren zu verbessern, weist der Verzahnungsbereich der Zahnwelle in dem Kontaktbereich mit der Hohlwelle zumindest teilweise eine Gleitbeschichtung aus Kunststoff auf. Diese Gleitbeschichtung ist auf einen aus Metall, in der Regel aus Stahl oder aus einer Aluminiumlegierung bestehenden Wellenkern aufgebracht. Durch den relativ zu Stahl bzw. zur Aluminiumlegierung weicheren und elastischeren Kunststoff wird das Verdrehspiel reduziert und die Reibung vermindert. Dadurch wird ein spielfreies, präzises Lenken ermöglicht und ein verbessertes Gleitverhalten realisiert, so dass eine geschmeidige und gleichmäßige Längspositionierung des Lenkrads ohne ruckartige Störungen aufgrund von Stick-Slip-Effekten erfolgen kann. Außerdem werden in vorteilhafter Weise die Übertragung von Vibrationen und die Entstehung von Geräuschen unterdrückt.

Damit in der Serienfertigung bei hohen Stückzahlen eine gleichbleibende, optimale Funktion einer derartigen Lenkwelle gewährleistet ist, muss die Gleitbeschichtung über die gesamte Produktion mit möglichst geringen Maß- bzw. Formabweichungen auf den Wellenkern aufgebracht werden. Dies setzt bei der Umspritzung mit Kunststoff zum einen eine entsprechend genaue Positionierung des Wellenkerns im Spritzgießwerkzeug voraus. Die Positionierung muss dabei möglichst exakt koaxial erfolgen, wobei die Längsachse des in der Grundform zylindrischen Wellenkerns über die axiale Länge des Verzahnungsbereichs mit der innenzylindrischen Grundform des Formhohlraums der Spritzgussform übereinstimmt, d.h. innerhalb der die Verzahnung begrenzenden Formflächen des Formhohlraums zentriert ist. Zum anderen muss gewährleistet sein, dass beim Spritzgießen möglichst keine Fehler in der dabei aufgebrachten Kunststoff-Gleitschicht auftreten. Dies können Formfehler wie Abweichungen in Bezug auf Rundheit, Konzentrizität und Wandstärke sein, und auch Spritzfehler wie Fließnähte durch aufeinandertreffende Fließfronten und dergleichen.

In der JP 2013141957A ist ein Verfahren zur Herstellung einer längenveränderbaren Lenkwelle beschrieben, bei dem das Einspritzen des schmelzflüssigem Kunststoffs in den Formhohlraum zwischen dem Wellenkern und der Formfläche des Formhohlraums über einen einzigen Anspritzpunkt erfolgt, der in axialer Richtung innerhalb des Verzahnungsbereichs angeordnet ist. Durch den Anspritzpunkt erfolgt die Einspritzung radial von außen in den Formhohlraum, wobei sich die Fließfront beim Einspritzen des schmelzflüssigen Kunststoffs vom Anspritzpunkt aus gesehen in jeweils beide Axial- und Umfangsrichtungen ausbreitet, so dass beim unvermeidlichen Zusammentreffen auf der dem Anspritzpunkt gegenüberliegenden Seite Fließnähte und andere Formfehler auftreten können.

Aus der ES 2 381 826 A1 ist ebenfalls ein Verfahren zur Herstellung einer Lenkwelle mit Umspritzung einer Zahnwelle mit einer Kunststoff- Gleitschicht bekannt. Dabei ist zur Verbesserung der Genauigkeit und zum Ausgleich von Formfehlern der Verzahnung nach dem Spritzgießen eine radiale Aufweitung zur Kalibrierung vorgesehen, um Spritzfehler auszugleichen. Dieses Vorgehen ist aufwendig und kann auch nicht sämtliche Spritzfehler beseitigen, wie sie beispielsweise bei dem aus der vorgenannten JP 2013141957A bekannten Spritzgießverfahren auftreten können.

Aus der JP 2008 222016 A ist ein ähnliches Verfahren mit den eingangs genannten Schritten bekannt.

Angesichts der vorangehend erläuterten Problematik ist es eine Aufgabe der vorliegenden Erfindung, ein Verfahren anzugeben, welches bei einem möglichst geringeren Fertigungsaufwand die Bereitstellung einer verbesserten Gleitbeschichtung ermöglicht.

### Darstellung der Erfindung

Zur Lösung der vorgenannten Problematik wird erfindungsgemäß vorgeschlagen, dass das Einspritzen des schmelzflüssigen Kunststoffs von einem axialen Endbereich des Formhohlraums aus durch mindestens einen Anspritzpunkt in einer Stirnwand des Formhohlraums erfolgt, die dem freien Ende der Zahnwelle gegenüberliegt.

Erfindungsgemäß erfolgt das Einspritzen durch mindestens einen Anspritzpunkt in einer Stirnwand des Formhohlraums. Während der Formhohlraum an seinem äußeren Umfang durch die Formfläche der Verzahnung begrenzt wird, ist stirnseitig zumindest eine den Formhohlraum axial begrenzende Stirnwand vorgesehen. Bevorzugt ist das Angusssystem mit zumindest einem Anspritzpunkt für die erfindungsgemäße axiale Befüllung des Formhohlraums in einer Stirnwand angeordnet, beipielsweise als axial durch die Stirnwand hindurchgeführte Einspritzdüse.

Bei der Erfindung liegt die Stirnwand, die mindestens einen Anspritzpunkt aufweist, dem freien Ende der Zahnwelle gegenüber, vorzugsweise mit vorgegebenem Abstand. Damit kann eine gleichmäßige Umspritzung der stirnseitigen freien Endbereiche der Verzahnung sichergestellt werden, deren Dicke dem stirnseitigem Abstand entspricht, und eine gute Zugänglichkeit in der Spritzgießvorrichtung gewährleistet werden.

Der Formhohlraum umgibt die Kernwelle im Verzahnungsbereich, und hat dabei eine im Wesentlichen hohlzylindrische Grundform mit im Außenumfang ausgebildeten Zähnen, wodurch der Verzahnungsbereich begrenzt wird. Beim erfindungsgemäßen Verfahren wird in diesen Formhohlraum von einem axialen Ende aus schmelzflüssiger Kunststoff eingespritzt. Von dort aus breitet sich der Kunststoff entlang eines Fließweges überwiegend in einer axialen Richtung aus. Dabei bewegt sich eine einzige, den Wellenkern ringförmig umschließende Fließfront in axialer Richtung durch den Formhohlraum, bis dieser über die gesamte axiale Länge des Verzahnungsbereichs vollständig mit Kunststoff gefüllt ist. Vorteilhaft dabei ist, dass Spritzfehler durch in Umfangsrichtung aufeinandertreffende Fließfronten im Bereich der Zähne vermieden werden. Die Formflächen, welche die einzelnen Zähne radial nach außen begrenzen, werden gleichmäßig gefüllt. Dadurch wird die Maß- und Formgenauigkeit der Verzahnung im Vergleich zu der im Stand der Technik bekannten radialen Anspritzung verbessert. Spritzfehler wie Fließnähte und dergleichen werden weitgehend vermieden.

Außerdem liegen die Angussdorne, die je nach eingesetzter Düsenform an einem Anspritzpunkt auftreten können, außerhalb der funktionalen Zahnflächen, so dass keine Beeinträchtigung auftreten kann und keine Nachbearbeitung der Zahnwelle erforderlich ist.

In einem Anspritzpunkt kann eine Einspritzdüse in Ausführungsformen angeordnet sein, die beim Spritzgießen bekannt sind. Im Folgenden werden daher die Begriffe "Anspritzpunkt" und "Einspritzdüse" gleichbedeutend verwendet, soweit nicht ausdrücklich eine abweichende Bedeutung gemeint ist.

Für die Ausbildung einer über den Umfang einheitlichen Fließfront ist es vorteilhaft, dass das Einspritzen durch eine Mehrzahl von über den Umfang verteilt angeordneten Anspritzpunkten erfolgt. Dabei ist es vorteilhaft, dass zwei oder mehr Anspritzpunkte gleichmäßig, d.h. im gleichen Winkelabstand zueinander über den Umfang verteilt angeordnet sind. Hierzu können zwei oder mehr Einspritzdüsen, die in einer Stirnwand auf einem koaxialen Kreis angeordnet sind, axial in den Formhohlraum münden.

Eine Weiterbildung des erfindungsgemäßen Verfahrens sieht vor, dass das Einspritzen in einen stirnseitig ringförmig um die Längsachse umlaufenden Angussraum des Formhohlraums erfolgt. Beim Einspritzen wird durch den oder die Anspritzpunkte zunächst der Angussraum gefüllt, wobei eine Homogenisierung der Füllung in Umfangsrichtung erfolgt. Von dem Angussraum aus läuft die über den Umfang geschlossene Fließfront wie beschrieben in axialer Richtung durch den gesamten Formhohlraum.

Ein derartiger Angussraum kann beispielsweise gebildet werden zwischen einer umlaufenden Fase am freien Ende des Wellenkerns und der Stirnwand des Formhohlraums. Eine abgeschrägte Fase kann an dem Wellenkern praktisch ohne merklichen zusätzlichen Fertigungsaufwand angebracht werden. In dem Formhohlraum liegt der Wellenkern stirnseitig dicht an der Stirnwand an, wobei zwischen der Stirnwand und der Fase ein Angussraum in Form einer Angussrinne freibleibt. Über mindestens einen Anspritzpunkt, der beispielsweise in der Stirnwand angeordnet ist, wird die Angussrinne beim Einspritzen zuerst gefüllt. Von dort breitet sich eine über den Umfang einheitliche Fließfront in axialer Richtung in dem Formhohlraum aus. Nach dem Aushärten bildet der in dem Angussraum befindliche Kunststoff die stirnseitige Kunststoffbeschichtung der Zähne.
Alternativ kann der Angussraum auch durch einen durchmesserreduzierten Absatz oder durch eine Verrundung am freien Ende des Wellenkerns gebildet sein.

Die Erfindung umfasst weiterhin eine Spritzgießvorrichtung zur Durchführung des erfindungsgemäßen Verfahrens, umfassend ein Spritzgießwerkzeug mit einem Formhohlraum, der sich in axialer Richtung entlang der Längsachse erstreckt und koaxial zwischen einer in dem Spritzgießwerkzeug angeordneten Kernwelle und Formflächen ausgebildet ist, die über einen Verzahnungsbereich eine koaxiale Verzahnung begrenzen, und mit mindestens einem Anspritzpunkt zum Einspritzen des schmelzflüssigen Kunststoffs in den Formhohlraum aufweist.

Das Spritzgießwerkzeug kann alternativ und gleichbedeutend auch als Spritzgussform bezeichnet werden.

Zur Durchführung des erfindungsgemäßen Verfahrens ist im Einzelnen vorgesehen, dass mindestens ein Anspritzpunkt in einem axialen Endbereich des den Verzahnungs-bereich begrenzenden Formhohlraums ausgebildet ist. Vorzugsweise ist der mindestens eine Anspritzpunkt stirnseitig angeordnet mit axialer Einspritzrichtung.

Dadurch wird die oben beschriebene vorteilhafte Befüllung des Formhohlraums mit schmelzflüssigem Kunststoff in nahezu ausschließlich axialer Richtung ermöglicht.

Es ist vorteilhaft, dass das Spritzgießwerkzeug segmentiert ausgebildet ist mit einer Mehrzahl von Formsegmenten, die sich jeweils über Umfangsbereiche um die Längsachse erstrecken und zumindest teilweise in radialer Richtung, d.h. in einer Richtung orthogonal zur Richtung der Längsachse, bewegbar sind. Um die Spritzgussform zu öffnen, können die Formsegmente sternförmig in radialer Richtung auseinander bewegt werden, so dass die Entformung in radialer Richtung erfolgt. Dadurch ist die Einbringung von Oberflächenstrukturen in die Zähne möglich, mit denen beispielsweise das Gleitverhalten optimiert werden kann. Beispielsweise können durch Vorsprünge in den Formsegmenten im Bereich der Zahnflanken Vertiefungen in der Kunststoffumspritzung ausgebildet werden, so dass die Vertiefungen in den Zahnflanken ein Schmierstoffrückhaltevolumen bilden.

Um den Formhohlraum wie beschrieben erfindungsgemäß von einem axialen Ende her zu befüllen, kann das Spritzgießwerkzeug zumindest eine den Formhohlraum in axialer Richtung begrenzende Stirnwand aufweisen, die zumindest einen Anspritzpunkt aufweist. Bevorzugt sind mehrere Anspritzpunkte vorgesehen, die bevorzugt über den Umfang gleichmäßig verteilt angeordnet sind.

Es ist vorteilhaft, dass das Spritzgießwerkzeug den Formhohlraum in axialer Richtung begrenzende Stirnwände aufweist, wobei zumindest eine der Stirnwände in axialer Richtung bewegbar ist. Zur Entformung wird zumindest eine Stirnwand in Längsrichtung von der fertig umspritzten Zahnwelle wegbewegt.

Zwischen den auf der Außenseite des Wellenkerns anliegenden Positionierflächen der Positionierelemente kann der Wellenkern in dem Formhohlraum auf der Längsachse zentriert und koaxial positionsgenau eingespannt werden. Dabei können die Positionierelemente innerhalb der axialen Erstreckung der Verzahnung angeordnet sein, also in dem Funktionsbereich der Verzahnung, der in dem Spritzgießwerkzeug mit Kunststoff umspritzt wird.

Werden die Positionierelemente innerhalb der axialen Erstreckung der Verzahnung angeordnet, können in vorteilhafter Weise Flächen der Verzahnung im Verzahnungsbereich, die zur Gewährleistung einer optimalen Teleskopierbarkeit ohnehin präzise und maßgenau bearbeitet sein müssen, zugleich zur Positionierung des Wellenkerns im Spritzgießwerkzeug genutzt werden, nämlich zur bevorzugten koaxialen, zentrierten Einspannung im Formhohlraum.

Dabei erfolgt die Abstützung und Positionierung des Wellenkerns im Funktionsbereich der Zahnwelle, nämlich innerhalb der axialen Erstreckung des Verzahnungsbereichs, der in der zusammengebauten Lenkwelle in der Innenverzahnung der Hohlwelle entlanggleiten kann. Dadurch kann die genaue koaxiale, zentrierte Ausrichtung der Kernwelle in dem Formhohlraum des Spritzgießwerkzeugs ohne zusätzliche bearbeitete Passflächen sichergestellt werden. Daraus resultiert eine über den Umfang gleichmäßig dicke Kunststoff-Gleitbeschichtung der Zähne mit hoher Genauigkeit in radialer Richtung.

Eine Weiterbildung der vorgenannten Positionierung sieht vor, dass eine erste Gruppe von Positionierelementen parallel zu einer ersten Radialebene des Formhohlraums angeordnet ist, und mindestens eine zweite Gruppe von Positionierelementen parallel zu einer zweiten Radialebene mit axialem Abstand zur ersten Radialebene. Die erste Radialebene und die zweite Radialebene schneiden die Längsachse wie beschrieben jeweils in einem ersten und einem zweiten Schnittpunkt. Entsprechend wird der Wellenkern in der ersten und in der zweiten Radialebene zentriert eingespannt. Folglich wird der Verzahnungsbereich zwischen den Schnittpunkten exakt koaxial in dem Formhohlraum ausgerichtet.

Alternativ kann es aber auch vorgesehen sein, dass die Positionierung des Wellenkerns an räumlich von der Verzahnung separat ausgebildeten Passflächen erfolgt. Beispielsweise kann die Zentrierung oder Ausrichtung des Wellenkerns zu dem Formhohlraum über die Innenkontur, also der Innenwandung der Bohrung in dem Wellenkern erfolgen, wenn der Wellenkern als Hohlwelle ausgebildet ist.

Das erfindungsgemäße Einspritzen, das von einem axialen Endbereich aus erfolgt, ist nicht auf eine bestimmte Positionierungsmethode beschränkt. Die oben beschriebenen Positioniermethoden sind zwar als sehr geeignet für das erfindungsgemäße Verfahren anzusehen, stellen jedoch nicht den einzigen gangbaren Weg dar, um den Wellenkern in dem Formhohlraum zu positionieren.

Die Spritzgießvorrichtung kann in dem Formhohlraum Positionierelemente aufweisen, die eine koaxiale Einspannung eines Wellenkerns ermöglichen. Bei den bekannten Spritzgießvorrichtungen sind die Positionierelemente so angeordnet, dass sie mit ihren Positionierflächen den Wellenkern zwischen außerhalb des Verzahnungsbereichs ausgebildeten Passflächen einspannen.

Die Ausbildung der Passflächen am Wellenkern erfordert einen zusätzlichen Fertigungsaufwand. Außerdem können zwischen den Passflächen und dem Verzahnungsbereich Toleranzen auftreten, welche die Maßhaltigkeit der Kunststoffbeschichtung beeinträchtigen. Daher ist es vorteilhaft, dass mindestens ein Positionierelement innerhalb des Verzahnungsbereichs angeordnet ist.

Durch diese Ausbildung der Spritzgießvorrichtung ist es möglich, den Wellenkern positionsgenau innerhalb der die Verzahnung begrenzenden Formfläche in dem Formhohlraum zu positionieren und einzuspannen.

Eine Weiterbildung sieht vor, dass mindestens ein Positionierelement an einem radial relativ zum Formhohlraum bewegbaren Schieber angeordnet ist. Zum Positionieren und Einspannen kann der Wellenkern durch radial nach innen gerichtete Bewegung der Schieber zwischen den Positionierelementen zentriert und koaxial eingespannt werden.

An einem Positionierelement ist im Bereich seines freien Endes, welches von außen gegen den Wellenkern bewegbar ist, mindestens eine Positionierfläche ausgebildet. Die Positionierfläche wird zum Positionieren und Einspannen erfindungsgemäß im Verzahnungsbereich mit dem Wellenkern in Kontakt gebracht. Daraus ergeben sich die oben beschriebenen Vorteile.

### Beschreibung der Zeichnungen

Vorteilhafte Ausführungsformen der Erfindung werden im Folgenden anhand der Zeichnungen näher erläutert. Im Einzelnen zeigen:
- Figur 1: eine Kraftfahrzeuglenkung,
- Figur 2: eine erfindungsgemäße Lenkwelle in perspektivischer Ansicht,
- Figur 3: eine erfindungsgemäße Lenkwelle gemäß Figur 2 in axial auseinander gezogener Darstellung,
- Figur 3a: eine Hohlwelle gemäß Figur 3 in einer perspektivischen Ansicht,
- Figur 4: eine Zahnwelle einer Lenkwelle gemäß Figur 2 mit Positionierelementen vor der Umspritzung mit Kunststoff,
- Figur 5: eine Zahnwelle einer Lenkwelle gemäß Figur 2 mit Positionierelementen nach der Umspritzung mit Kunststoff,
- Figur 6: einen Querschnitt durch ein erfindungsgemäßes Spritzgießwerkzeug mit einer darin eingespannten Zahnwelle,

- Figur 6a: eine Detailansicht eines Querschnitts durch ein erfindungsgemäßes Spritzgießwerkzeug ähnlich Figur 6 mit einer darin eingespannten Zahnwelle vor dem Einspritzen des Kunststoffs,
- Figur 7: eine vergrößerte Querschnittansicht der im Spritzgießwerkzeug eingespannten Zahnwelle gemäß Figur 6,
- Figur 8: ein Längsschnitt durch ein Spritzgießwerkzeug in geschlossenem Zustand vor dem Einspritzen von Kunststoff,
- Figur 9: ein Längsschnitt durch das Spritzgießwerkzeug gemäß Figur 8 in geschlossenem Zustand nach dem Einspritzen von Kunststoff,
- Figur 10: ein Längsschnitt durch ein Spritzgießwerkzeug gemäß Figur 9 in entformtem (geöffnetem) Zustand,
- Figur 11: Zahnwelle einer Lenkwelle mit Positionierelementen nach der Umspritzung mit Kunststoff in einer alternativen Ausführungsform.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

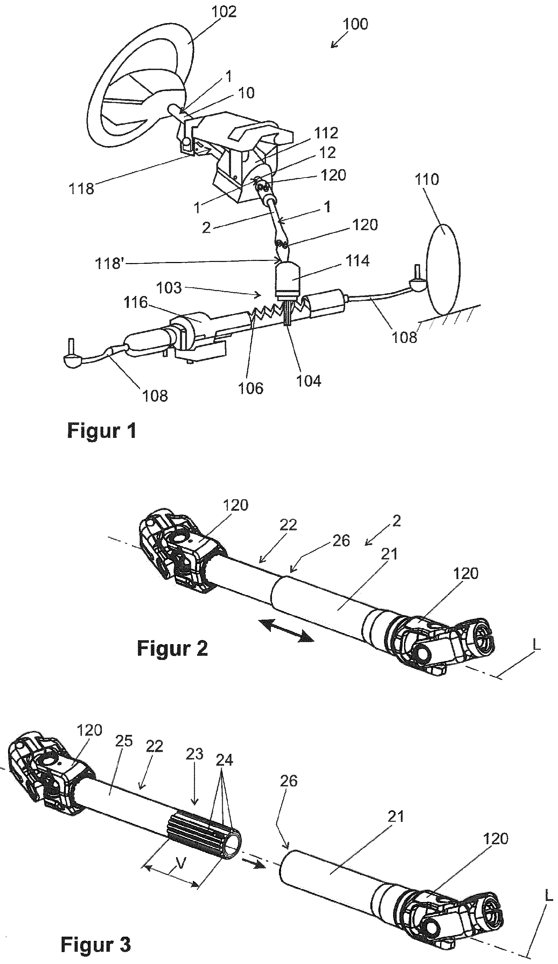

In Figur 1 ist eine Kraftfahrzeuglenkung 100 schematisch dargestellt, wobei ein Fahrer über ein Lenkrad 102 ein entsprechendes Lenk-Drehmoment (Lenkmoment) als Lenkbefehl in eine Lenkwelle 1 einbringen kann. Das Lenkmoment wird über die Lenkwelle 1 auf ein Lenkritzel 104 übertragen, welches mit einer Zahnstange 106 kämmt, die dann ihrerseits über eine Verschiebung der Spurstangen 108 den vorgegebenen Lenkwinkel auf die lenkbaren Räder 110 des Kraftfahrzeugs überträgt.

Eine elektrische Hilfskraftunterstützung kann in Form einer eingangsseitig mit der Lenkwelle 1 gekoppelten Hilfskraftunterstützung 112, einer mit dem Ritzel 104 gekoppelten Hilfs-kraftunterstützung 114 und/oder einer mit der Zahnstange 106 gekoppelten Hilfskraftunter-stützung 116 vorgesehen sein. Die jeweilige Hilfskraftunterstützung 112, 114 oder 116 koppelt ein Hilfsdrehmoment in die Lenkwelle 1 und/oder das Lenkritzel 104 und/oder eine Hilfskraft in die Zahnstange 106 ein, wodurch der Fahrer bei der Lenkarbeit unterstützt wird. Die drei unterschiedlichen, in der Figur 1 dargestellten Hilfskraftunterstützungen 112, 114 und 116 zeigen mögliche Positionen für deren Anordnung.

Üblicherweise ist nur eine einzige der gezeigten Positionen mit einer Hilfskraftunterstützung 112, 114 oder 116 belegt. Das Hilfsdrehmoment bzw. die Hilfskraft, welche zur Unterstützung des Fahrers mittels der jeweiligen Hilfskraftunterstützung 112, 114 oder 116 aufgebracht werden soll, wird unter Berücksichtigung eines von einem Drehmomentsensor 118 ermittelten, vom Fahrer eingebrachten Lenkmoments bestimmt. Alternativ oder in Kombinati-on mit der Einbringung des Hilfsdrehmoments kann von der Hilfskraftunterstützung 112, 114, 116 ein zusätzlicher Lenkwinkel in das Lenksystem eingebracht werden, der sich mit dem vom Fahrer über das Lenkrad 102 aufgebrachten Lenkwinkel summiert.

Die Lenkwelle 1 weist eingangsseitig eine mit dem Lenkrad 102 verbundene Eingangswelle 10 und ausgangsseitig eine mit der Zahnstange 106 über das Lenkritzel 104 verbundene Ausgangswelle 12 auf. Die Eingangswelle 10 und die Ausgangswelle 12 sind drehelastisch über einen in der Figur 1 nicht zu erkennenden Drehstab miteinander gekoppelt. Damit führt ein von einem Fahrer über das Lenkrad 102 in die Eingangswelle 10 eingetragenes Drehmoment immer dann zu einer Relativdrehung der Eingangswelle 10 be-züglich der Ausgangswelle 12, wenn die Ausgangswelle 12 sich nicht exakt synchron zu der Eingangswelle 10 dreht. Diese Relativdrehung zwischen Eingangswelle 10 und Ausgangs-welle 12 kann über einen Drehwinkelsensor gemessen werden und entsprechend aufgrund der bekannten Torsionssteifigkeit des Drehstabes ein entsprechendes Eingangsdreh-moment relativ zur Ausgangswelle 12 bestimmt werden. Auf diese Weise wird durch die Be-stimmung der Relativdrehung zwischen Eingangswelle 10 und Ausgangswelle 12 der Dreh-momentsensor 118 ausgebildet. Ein solcher Drehmomentsensor 118 ist prinzipiell bekannt und kann beispielsweise eine elektromagnetische Sensoranordnung, wie sie weiter unten beschrieben wird, oder durch eine andere Messung der Relativverdrehung realisiert werden.

Entsprechend wird ein Lenkmoment, welches von dem Fahrer über das Lenkrad 102 auf die Lenkwelle 1 beziehungsweise die Eingangswelle 10 aufgebracht wird, nur dann den Eintrag eines Hilfsdrehmoments durch eine der Hilfskraftunterstützungen 112, 114, 116 bewirken, wenn die Ausgangswelle 12 gegen den Drehwiderstand des Drehstabs relativ zu der Eingangswelle 10 verdreht wird.

Der Drehmomentsensor 118 kann auch alternativ an der Position 118' angeordnet sein, wobei dann die Durchbrechung der Lenkwelle 1 in Eingangswelle 10 und Ausgangswelle 12 und die drehelastische Kopplung über den Drehstab entsprechend an einer anderen Position vorliegt, um aus der Relativverdrehung der über den Drehstab mit der Eingangswelle 10 gekoppelten Ausgangswelle 12 eine Relativdrehung und damit entsprechend ein Eingangsdrehmoment und/oder ein einzubringendes Hilfsdrehmoment bestimmen zu können.

Die Lenkwelle 1 gemäß Figur 1 umfasst weiterhin mindestens ein kardanisches Gelenk 120, mittels welchem der Verlauf der Lenkwelle 1 im Kraftfahrzeug an die räumlichen Gegebenheiten angepasst werden kann. Der Lenkzwischenwelle der Lenkwelle 1, der in dem dargestellten Beispiel zwischen zwei kardanischen Gelenken 120 angeordnet ist und die Ausgangswelle 12 mit dem Ritzel 104 des Lenkgetriebes 103 verbindet, ist erfindungsgemäß als längenveränderbare Lenkwelle 2 ausgebildet.

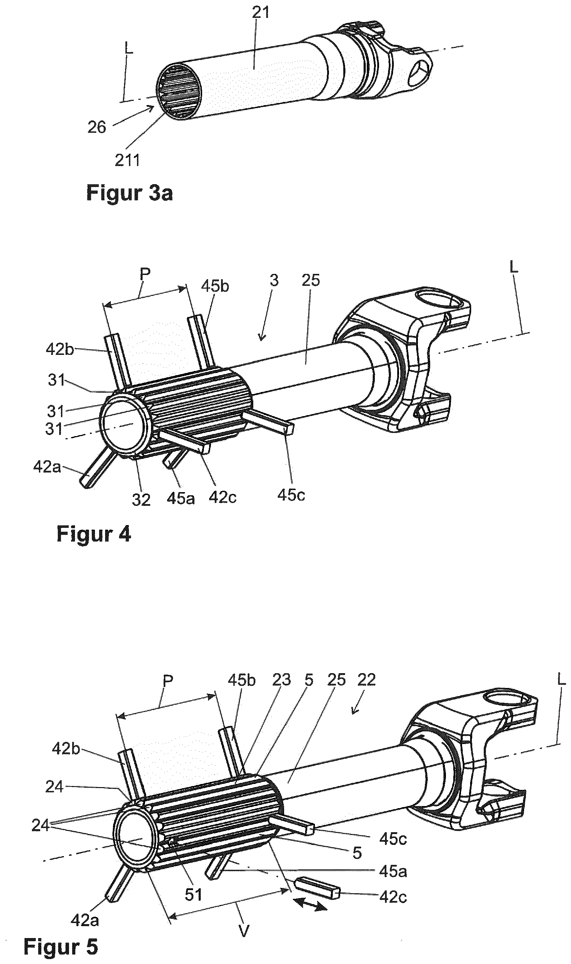

Figur 2 und Figur 3 zeigen die Lenkwelle 2 in montiertem Zustand (Figur 2) und in axialer Richtung auseinander gezogenem Zustand (Figur 3).

Die Lenkwelle 2 umfasst eine Hohlwelle 21 und eine Zahnwelle 22. Die Zahnwelle 22 weist einen Verzahnungsbereich 23 mit einer Mehrzahl von auf dem Außenumfang angeordneten Zähnen 24 auf, die sich in Richtung der Längsachse L, d.h. axial über die Länge V des Verzahnungsbereichs 23 erstrecken.

Die Hohlwelle 21, die in der Figur 3a in einer perspektivischen Ansicht dargestellt ist, weist eine zur Zahnwelle 22 hin offene Aufnahmeöffnung 26 auf mit einer Innenverzahnung 211, in welcher der Verzahnungsbereich 23 formschlüssig aufnehmbar ist. Zur Herstellung einer drehmomentschlüssigen Verbindung wird die Zahnwelle 22 ausgehend von der in Figur 3 dargestellten Situation in axialer Richtung, wie mit dem Pfeil angedeutet in Richtung der Längsachse L in die Aufnahmeöffnung 26 der Hohlwelle 21 eingeführt, so dass der in Figur 2 dargestellte montierte Zustand erreicht wird. In diesem zusammengebauten Zustand können sich die Zahnwelle 22 und die Hohlwelle 21 zum Ausgleich von Abstandsunterschieden entlang der Längsachse L relativ zueinander bewegen, wie mit dem Doppelpfeil angedeutet.

Aus Figur 3 ist entnehmbar, dass die Zahnwelle 22 außerhalb des Verzahnungsbereichs 23 einen zylindrischen Schaft 25 aufweist, wobei in dem dargestellten Beispiel die Länge V des Verzahnungsbereichs 23 nur einem Teil der Gesamtlänge der Zahnwelle 22 entspricht.

Figur 4 zeigt eine Zahnwelle 22 im teilfertigen Zustand vor der Umspritzung. Diese wird gebildet durch einen bevorzugt aus Metall, vorzugsweise aus Stahl oder einer Aluminiumlegierung bestehenden Wellenkern 3. Im Verzahnungsbereich 23 der fertigen Zahnwelle 22 gemäß Figur 5 weist der Wellenkern 3 Kernzähne 31 auf, die im Bereich der Zähne 24 des fertigen Verzahnungsbereichs 23 angeordnet sind, so dass sie die aus Stahl bestehenden Grundkörper darstellen, die zur Bildung der fertigen Zähne 24 mit Kunststoff umspritzt werden. Die Länge der Kernzähne 31 in Richtung der Längsachse L entspricht im Wesentlichen der Länge V der fertig umspritzten Zähne 24, und zwar abzüglich der Wandstärke einer möglichen stirnseitigen, d.h. axialen Umspritzung der Kernzähne 31.

Aus Figur 4 und 5 geht hervor, dass die Längsachse L der Zahnwelle 22 und des Wellenkerns 3 identisch ist.

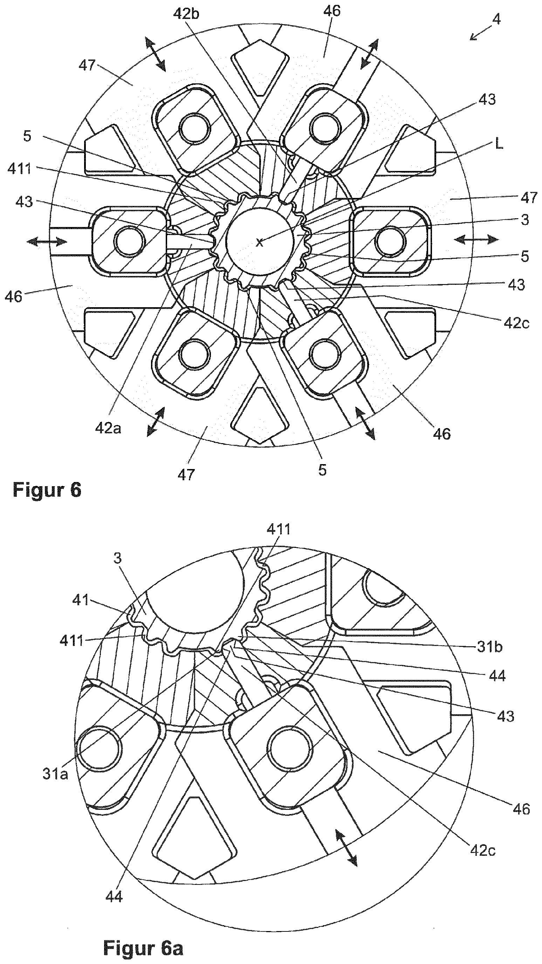

Figur 6 zeigt einen Querschnitt senkrecht zur Längsachse L durch eine Spritzgussform 4 zur Durchführung des erfindungsgemäßen Verfahrens. Insbesondere ist dieser Darstellung entnehmbar, wie der Wellenkern 3 zentriert, d.h. konzentrisch zur Längsachse L zwischen Positionierelementen 42a, 42b und 42c eingespannt ist. Die Anordnung der Positionierelemente 42a, 42b und 42c ist auch in Figur 4 und Figur 5 schematisch gezeigt, wobei die übrige Spritzgussform 4 zur besseren Übersichtlichkeit weggelassen ist.

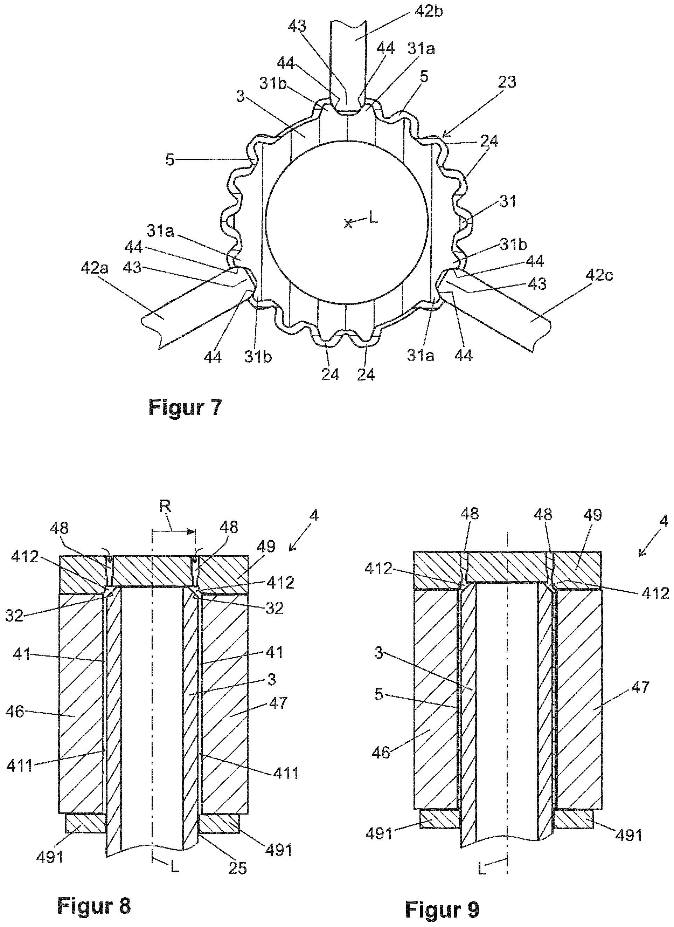

Die Positionierelemente 42a, 42b und 42c sind stiftförmig ausgebildet, im dargestellten Beispiel mit rechteckigem bzw. quadratischem Querschnitt, dessen Abmessung in Richtung der Längsachse L nur einen Bruchteil der Länge V des Verzahnungsbereichs 23 beträgt. Im gezeigten Beispiel sind die drei Positionierelemente 42a, 42b und 42c gleichmäßig über den Umfang verteilt angeordnet und sind mit ihren freien Enden 43 radial nach innen gegen die Längsachse L gerichtet, so dass der Wellenkern 3 zwischen den freien Enden 43 in einem Formhohlraum 41 koaxial relativ zur Längsachse L zentriert eingespannt ist. In der Spritzgussform 4 ist der Wellenkern 3 im Verzahnungsbereich 23 von der die Zähne 24 begrenzenden Formfläche 411 umgeben, d.h. diese Formfläche 411 bildet den Negativabdruck des Verzahnungsbereichs 23. Die Formfläche 411 ist ebenfalls koaxial zur Längsachse L orientiert. Im Detail ist diese Anordnung in der vergrößerten Darstellung von Figur 7 erkennbar.

Die Positionierelemente 42a, 42b und 42c weisen im Bereich ihrer freien Enden 43 Positionierflächen 44 auf. Die Positionierflächen 44 sind so angeordnet, dass sie mit den in Umfangsrichtung einander zugewandten Zahnflanken benachbarter Kernzähne 31a und 31b in Kontakt kommen. Dadurch können die Positionierelemente 42a, 42b und 42c mit den Positionierflächen 44 von außen jeweils formschlüssig zwischen benachbarte Kernzähne 31 a und 31b eingreifen. Dadurch ist der Wellenkern 3 durch die Positionierelemente 42a, 42b und 42c winkelgenau bezüglich einer Drehung um die Längsachse L innerhalb des Formhohlraums 41 orientiert und zentriert eingespannt. Die Positionierflächen 44 wirken mit der dem Positionierelement 42a, 42b und 42c zugewandten Zahnflanke des jeweiligen benachbarten Kernzahns 31a, 31b zusammen.

Die Positionierelemente 42a, 42b und 42c sind in einer ersten Radialebene angeordnet, nämlich in der in Figur 6 gezeigten Querschnittsebene. Wie Figur 4 und Figur 5 entnehmbar ist, sind zweite Positionierelemente 45a, 45b und 45c, die prinzipiell gleich ausgestaltet sind, in einer zweiten Radialebene angeordnet, die in Richtung der Längsachse L einen Abstand P (siehe Figur 4) zur ersten Radialebene hat. Für das gezeigte Beispiel gilt, dass P kleiner ist als L, so dass sämtliche Positionierelemente 45a, 45b, 45c, 42a, 42b und 42c innerhalb des Verzahnungsbereichs 23 angeordnet sind. Dadurch wird der Wellenkern 3 in den Schnittpunkten der ersten und zweiten Radialebene exakt auf der Längsachse L zentriert und ist im Abstand P entsprechend genau konzentrisch in dem Formhohlraum 41 ausgerichtet.

Um den Wellenkern 3 innerhalb des Formhohlraums 41 einspannen zu können, sind die Positionierelemente 42a, 42b und 42c jeweils an einem Schieber 46 angebracht, der segmentartig ausgebildet ist und relativ zur Längsachse L radial bewegbar ist, wie in Figur 6 mit den Doppelpfeilen angedeutet. Bevorzugt sind jeweils zwei in derselben Umfangsposition angeordnete Positionierelemente 42a und 45a, 42b und 45b, sowie 42c und 45c jeweils an einem Schieber 46 befestigt.
Zwischen den Schiebern 46 sind in Umfangsrichtung Schieber 47 angeordnet, die ebenfalls segmentartig ausgebildet sind und zum Entformen bezüglich der Längsachse L radial zusammen mit den Schiebern 46 kollisionsfrei auseinanderbewegt werden können.

Werden die Schieber 46 und 47 radial auseinander bewegt, kann ein Wellenkern 3 in die Spritzgussform 4 eingebracht werden. Anschließend werden die Schieber 46 und 47 in radialer Richtung nach innen zusammengefahren, wobei der Wellenkern 3 zwischen den Positionierflächen 44 der Positionierelemente 45a, 45b, 45c, 42a, 42b und 42c wie oben beschrieben zentriert und winkelorientiert im Formhohlraum 41 eingespannt wird. Gleichzeitig wird durch das Zusammenfahren der Schieber 46 und 47 die Spritzgussform 4 geschlossen, wobei die Formfläche 411 in Umfangsrichtung geschlossen wird. Die Formfläche 411 und der Formhohlraum 41 lässt sich besonders gut in der Figur 6a erkennen, in der eine Detailansicht des in der Figur 6 dargestellten Querschnitts des Spritzgießwerkzeugs 4 mit einer darin eingespannten Zahnwelle 22 vor dem Einspritzen des Kunststoffs dargestellt ist.

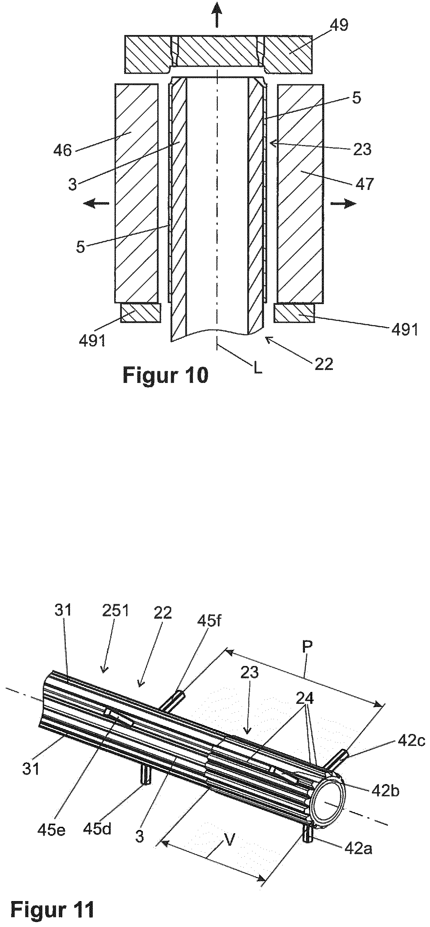

Figuren 8, 9 und 10 zeigen jeweils einen Längsschnitt entlang der Längsachse L durch eine Spritzgussform 4, und zwar in geschlossenem Zustand vor dem Einspritzen, d.h. ungefüllt (Figur 8), in mit Kunststoff gefülltem Zustand (Figur 9) sowie in geöffnetem Zustand zum Entformen (Figur 10).

Die Spritzgussform 4 weist segmentförmige Schieber 46 und 47 auf, die - wie Figur 6 entnehmbar - sternförmig um die Längsachse L angeordnet sind und mit ihren radial innen liegenden Formflächen 411 den Formhohlraum 41 begrenzen, der die Kernwelle 3 im Verzahnungsbereich 23 umgibt. Am freien Ende der Kernwelle 3, in der Figuren 8 bis 10 oben, ist der Formhohlraum 41 von einer Stirnwand 49 geschlossen, die wie dargestellt stirnseitig an der Kernwelle 3 anliegt. Mit einem Abstand vom freien Ende, welcher der Länge V des Verzahnungsbereichs 23 entspricht, ist der Formhohlraum 41 von einer weiteren Stirnwand 491 geschlossen. Die weitere Stirnwand 491 kann auch als Abdichtschieber bezeichnet werden. Diese Stirnwand 491 ist bevorzugt segmentartig ausgebildet und lässt sich sternförmig radial nach außen auseinanderbewegen, so dass die Kernwelle 3 in die Spritzgussform 4 eingelegt werden kann bzw. nach dem Umspritzen die Zahnwelle 22 entnommen werden kann. Die Stirnwand 491 begrenzt das Fließen der Kunststoffschmelze während dem Umspritzen in Richtung der Längsachse L.

An ihrem freien Ende weist die Kernwelle 3 eine umlaufende Fase 32 auf, die auch in Figur 4 erkennbar ist. Zwischen dieser Fase 32 und der Stirnwand 49 wird ein durchgehend ringförmiger Angussraum 412 gebildet, der zum Formhohlraum 41 offen ist. Die Anspritzpunkte 48 sind in der Stirnwand 49 auf einem zur Längsachse L koaxialen Kreis mit Radius R angeordnet, und zwar bevorzugt in gleichen Winkelabständen zueinander, so dass sie stirnseitig in den Angussraum 412 einmünden. Folglich kann durch die Anspritzpunkte 48 schmelzflüssiger thermoplastischer Kunststoff in axialer Richtung in den Angussraum 412 eingespritzt werden, wie dies in Figur 8 mit den Pfeilen angedeutet ist. Der Angussraum 412 bildet den axialen Endbereich des Formhohlraums 41, entsprechend erfolgt das Einspritzen des Kunststoffs erfindungsgemäß von dem axialen Endbereich des Formhohlraums 41 aus, der durch seine Abmessungen und die Wandstärke der Kunststoff-Umspritzung 5 definiert, welche die Gleitbeschichtung bildet. Der axiale Endbereich ist bevorzugt im Bereich der Stirnseite des Wellenkerns 3 angeordnet.

Der durch die Anspritzpunkte 48 eingespritzte Kunststoff füllt zunächst den Angussraum 412 aus und bewegt sich anschließend mit einer einheitlichen, den zur Längsachse L koaxial ringförmigen Formhohlraum 41 über seinen gesamten Umfang ausfüllenden, geschlossenen Fließfront in axialer Richtung an dem Verzahnungsbereich 23 entlang, bis die gegenüberliegende Stirnwand 491 erreicht ist. Dieser gefüllte Zustand ist in Figur 9 dargestellt, bei dem der Formhohlraum 41 vollständig mit Kunststoff gefüllt ist, so dass mit anderen Worten der Formhohlraum 41 vollständig mit der die Gleitbeschichtung bildenden Kunststoff-Umspritzung 5 ausgefüllt ist.

Nach dem Erkalten kann die fertige Zahnwelle 22 entformt werden, was in Figur 10 dargestellt ist. Nach dem Abkühlen und Aushärten der Kunststoff-Umspritzung 5 werden die Schieber 46 und 47 zum Entformen sternförmig radial nach außen auseinanderbewegt, und die Stirnwand 48 wird in axialer Richtung vom freien Ende der Kernwelle 3 wegbewegt, wie dies in Figur 9 mit den radialen und axialen Pfeilen angedeutet ist. Dann kann die fertig umspritzte Zahnwelle 22 aus der Spritzgussform 4 entnommen werden.

In der Figur 11 ist eine Zahnwelle 22 einer Lenkwelle 1 mit Positionierelementen (42a, 42b, 42c, 45d, 45f, 45g) nach der Umspritzung mit Kunststoff in einer alternativen Ausführungsform dargestellt. Die Zahnwelle 22 weist außerhalb des Verzahnungsbereichs 23 einen kernverzahnten Schaft 251 auf. Die Positionierelemente 42a, 42b und 42c sind in einer ersten Radialebene angeordnet. Die zweiten Positionierelemente 45a, 45b und 45c, die prinzipiell gleich ausgestaltet sind, sind in einer zweiten Radialebene angeordnet, die in Richtung der Längsachse L einen Abstand P zur ersten Radialebene aufweist. Für das gezeigte Ausführungsbeispiel gilt, dass P grösser ist als V, so dass lediglich die Positionierelemente 42a, 42b und 42c innerhalb des Verzahnungsbereichs 23 angeordnet sind. Die Positionierelemente 45d, 45e und 45f sind außerhalb des Verzahnungsbereichs 23 angeordnet. Der Wellenkern 3 weist die Kernzähne 31 auf, die sich über den Verzahnungsbereich 23 hinaus in Richtung der Längsachse L über den gesamten Schaft 251 erstrecken. Der Wellenkern 3 ist bevorzugt als ein gezogenes Profil oder Strangpressprofil ausgebildet. Vorteil dieser Ausführungsform ist es, dass die erste und zweite Radialebene eine große Distanz zueinander aufweisen, so dass eine Schiefstellung der eingespannten Zahnwelle 22 minimiert wird, da ein radialer Versatz der Positionierelemente in der einen Radialebene im Vergleich zum Idealzustand einen geringen Einfluss auf die Schiefstellung nach sich zieht, da die abstützende Länge verhältnismäßig groß ist.

**Bezugszeichenliste**

| | | | |
|---|---|---|---|
| 1 | Lenkwelle | 25, 251 | Schaft |
| 10 | Eingangswelle | 26 | Aufnahmeöffnung |
| 12 | Ausgangswelle | 3 | Wellenkern |
| 100 | Kraftfahrzeuglenkung | 31 | Kernzahn |
| 102 | Lenkrad | 31a,b | benachbarter Kernzahn |
| 103 | Lenkgetriebe | 32 | Fase |
| 104 | Lenkritzel | 4 | Spritzgussform/Spritzgießwerkzeug |
| 106 | Zahnstange | 41 | Formhohlraum |
| 108 | Spurstange | 411 | Formfläche |
| 110 | lenkbares Rad | 412 | Angussraum |
| 112 | Hilfskraftunterstützung | 42a,b,c | Positionierelement |
| 114 | Hilfskraftunterstützung | 43 | freies Ende |
| 116 | Hilfskraftunterstützung | 44 | Positionierflächen |
| 118 | Drehmomentsensor | 45a,b,c | Positionierelemente |
| 118' | Drehmomentsensor | 46, 47 | Schieber |
| 120 | Gelenk | 48 | Anspritzpunkt |
| 2 | längenveränderbare Lenkwelle | 49, 491 | Stirnwand |
| 21 | Hohlwelle | 5 | Kunststoff-Umspritzung |
| 22 | Zahnwelle | L | Längsachse |
| 23 | Verzahnungsbereich | V | Länge Verzahnungsbereich |
| 24 | Zähne | R | Radius |

## Patentansprüche

1. Verfahren zur Herstellung einer längenveränderbaren Lenkwelle (2), umfassend eine Hohlwelle (21) mit einer Innenverzahnung (211), in der in axialer Richtung teleskopierbar eine formschlüssig eingreifende Zahnwelle (22) angeordnet ist, die einen Verzahnungsbereich (23) mit auf dem Außenumfang angeordneten, sich in axialer Richtung erstreckenden Zähnen (24) aufweist, wobei im Verzahnungsbereich (23) ein Wellenkern (3) im Spritzgussverfahren mit einer Gleitbeschichtung (5) aus thermoplastischem Kunststoff umspritzt wird, mit den Schritten
- Positionieren des Wellenkerns (3) innerhalb eines Formhohlraums (41) eines Spritzgießwerkzeugs (4) koaxial zu einer den Verzahnungsbereich (23) begrenzenden Formfläche (411),
- Einspritzen von schmelzflüssigem Kunststoff in den Formhohlraum (41) zwischen dem Wellenkern (3) und der Formfläche (411) des Formhohlraums (41),
- Entnehmen der Zahnwelle (22) aus dem Spritzgießwerkzeug (4) nach dem Erstarren des Kunststoffs,
- Bereitstellen der Hohlwelle (21) und axiales Einführen des Verzahnungsbereichs (23) in die Innenverzahnung,
**gekennzeichnet dadurch,**
**dass** das Einspritzen des schmelzflüssigen Kunststoffs von einem axialen Endbereich des Formhohlraums (41) aus durch mindestens einen Anspritzpunkt (48) in einer Stirnwand des Formhohlraums (41) erfolgt, die dem freien Ende der Zahnwelle (22) gegenüberliegt.

2. Verfahren nach Anspruch 1, **dadurch gekennzeichnet, dass** das Einspritzen durch eine Mehrzahl von über den Umfang verteilt angeordneten Anspritzpunkten (84) erfolgt.

3. Verfahren nach einem der vorangehenden Ansprüche, **dadurch gekennzeichnet, dass** das Einspritzen in einen stirnseitig ringförmig um die Längsachse (L) umlaufenden Angussraum (411) des Formhohlraums (41) erfolgt.

4. Verfahren nach Anspruch 3, **dadurch gekennzeichnet, dass** der Angussraum (412) gebildet wird zwischen einer umlaufenden Fase am freien Ende (43) des Wellenkerns (3) und der Stirnwand des Formhohlraums (41).

5. Spritzgießvorrichtung zur Durchführung des Verfahrens nach einem der vorangehenden Ansprüche, umfassend ein Spritzgießwerkzeug (4) mit einem Formhohlraum (41), der sich in axialer Richtung entlang der Längsachse (L) erstreckt und koaxial zwischen einer in dem Spritzgießwerkzeug (4) angeordneten Kernwelle (3) und Formflächen (411) ausgebildet ist, die über einen Verzahnungsbereich (23) eine koaxiale Verzahnung begrenzen, und mit mindestens einem Anspritzpunkt (48) zum Einspritzen des schmelzflüssigen Kunststoffs in den Formhohlraum (41) aufweist,
**dadurch gekennzeichnet,**
**dass** mindestens ein Anspritzpunkt (48) in einem axialen Endbereich des den Verzahnungsbereich (23) begrenzenden Formhohlraums (41) ausgebildet ist.

6. Spritzgießvorrichtung nach Anspruch 5, **dadurch gekennzeichnet, dass** das Spritzgießwerkzeug (4) segmentiert ausgebildet ist mit einer Mehrzahl von Formsegmenten, die sich jeweils über Umfangsbereiche um die Längsachse (L) erstrecken und zumindest teilweise in radialer Richtung bewegbar sind.

7. Spritzgießvorrichtung nach einem der vorangehenden Ansprüche 5 bis 6, **dadurch gekennzeichnet, dass** das Spritzgießwerkzeug (4) zumindest eine den Formhohlraum (41) in axialer Richtung begrenzende Stirnwand aufweist, die zumindest einen Anspritzpunkt (48) aufweist.

8. Spritzgießvorrichtung nach einem der vorangehenden Ansprüche 5 bis 7, **dadurch gekennzeichnet, dass** das Spritzgießwerkzeug (4) den Formhohlraum (41) in axialer Richtung begrenzende Stirnwände aufweist, wobei zumindest eine der Stirnwände in axialer Richtung bewegbar ist.

9. Spritzgießvorrichtung nach einem der vorangehenden Ansprüche 5 bis 8, **dadurch gekennzeichnet, dass** in dem Formhohlraum (41) Positionierelemente (42a, 42b, 42c, 45a, 45b, 45c) zur koaxialen Positionierung eines Wellenkerns (3) angeordnet sind, wobei bevorzugt mindestens ein Positionierelement (42a, 42b, 42c, 45a, 45b, 45c) innerhalb des Verzahnungsbereichs (23) angeordnet ist.

10. Spritzgießvorrichtung nach einem der vorangehenden Ansprüche 5 bis 9, **dadurch gekennzeichnet, dass** mindestens ein Positionierelement (42a, 42b, 42c, 45a, 45b, 45c) an einem radial relativ zur Längsachse (L) des Formhohlraums (41) bewegbaren Schieber (46) angeordnet ist.

## Claims

1. Method for producing a variable-length steering shaft (2), comprising a hollow shaft (21) with an internal toothing (211) in which a toothed shaft (22) which engages in positively locking fashion is arranged so as to be telescopable in an axial direction, which toothed shaft comprises a toothing region (23) with teeth (24) arranged on the outer circumference and extending in the axial direction, wherein, in the toothing region (23), a shaft core (3) is, in the injection molding process, overmolded with a sliding coating (5) composed of thermoplastic material, having the steps:
- positioning the shaft core (3) within a mold cavity (41) of an injection molding tool (4) coaxially with respect to a mold surface (411) that delimits the toothing region (23),
- injecting molten plastic into the mold cavity (41) between the shaft core (3) and the mold surface (411) of the mold cavity (41),
- removing the toothed shaft (22) from the injection molding tool (4) after the plastic has solidified,
- providing the hollow shaft (21) and axially inserting the toothing region (23) into the internal toothing,
**characterized**
**in that** the injection of the molten plastic is performed from one axial end region of the mold cavity (41) through at least one gate point (48) in an end wall of the mold cavity (41), which end wall is situated opposite the free end of the toothed shaft (22).

2. Method according to Claim 1, **characterized in that** the injection is performed through a multiplicity of gate points (84) arranged so as to be distributed over the circumference.

3. Method according to one of the preceding claims, **characterized in that** the injection is performed into a gate chamber (411), running in ring-shaped encircling fashion around the longitudinal axis (L) at an end side, of the mold cavity (41).

4. Method according to Claim 3, **characterized in that** the gate chamber (412) is formed between an encircling bevel at the free end (43) of the shaft core (3) and the end wall of the mold cavity (41).

5. Injection molding device for carrying out the method according to one of the preceding claims, comprising an injection molding tool (4) with a mold cavity (41) which extends in an axial direction along the longitudinal axis (L) and which is formed coaxially between a core shaft (3), arranged in the injection molding tool (4), and mold surfaces (411) which, by means of a toothing region (23), delimit a coaxial toothing, and with at least one gate point (48) for the injection of the molten plastic into the mold cavity (41), **characterized**
**in that** at least one gate point (48) is formed in an axial end region of the mold cavity (41) that delimits the toothing region (23).

6. Injection molding device according to Claim 5, **characterized in that** the injection molding tool (4) is of segmented form with a multiplicity of mold segments which each extend over circumferential regions around the longitudinal axis (L) and which are at least partially movable in a radial direction.

7. Injection molding device according to either of the preceding Claims 5 and 6, **characterized in that** the injection molding tool (4) has at least one end wall which delimits the mold cavity (41) in the axial direction and which has at least one gate point (48).

8. Injection molding device according to one of the preceding Claims 5 to 7, **characterized in that** the injection molding tool (4) has end walls which delimit the mold cavity (41) in the axial direction, wherein at least one of the end walls is movable in the axial direction.

9. Injection molding device according to one of the preceding Claims 5 to 8, **characterized in that** positioning elements (42a, 42b, 42c, 45a, 45b, 45c) for the coaxial positioning of a shaft core (3) are arranged in the mold cavity (41),
wherein preferably at least one positioning element (42a, 42b, 42c, 45a, 45b, 45c) is arranged within the toothing region (23).

10. Injection molding device according to one of the preceding Claims 5 to 9, **characterized in that** at least one positioning element (42a, 42b, 42c, 45a, 45b, 45c) is arranged on a slide (46) which is movable radially relative to the longitudinal axis (L) of the mold cavity (41).

## Revendications

1. Procédé de réalisation d'un arbre de direction de longueur variable (2), comprenant un arbre creux (21) avec une denture intérieure (211) dans laquelle est disposé, de manière télescopable dans la direction axiale, un arbre denté (22) s'engageant par correspondance de formes, qui présente une zone de denture (23) avec des dents (24) s'étendant dans la direction axiale, disposées sur la périphérie extérieure, un noyau d'arbre (3) étant surmoulé dans la zone de denture (23) par un procédé de moulage par injection, avec un revêtement glissant (5) en plastique thermoplastique, le procédé comprenant les étapes suivantes :
- positionnement du noyau d'arbre (3) à l'intérieur d'une cavité de moule (41) d'un outil de moulage par injection (4), coaxialement à une surface de moule (411) limitant la zone de denture (23),
- injection de plastique en fusion dans la cavité de moule (41) entre le noyau d'arbre (3) et la surface de moule (411) de la cavité de moule (41),
- enlèvement de l'arbre denté (22) de l'outil de moulage par injection (4) après la rigidification du plastique,
- fourniture de l'arbre creux (21) et introduction axiale de la zone de denture (23) dans la denture intérieure,
**caractérisé en ce que**
l'injection du plastique en fusion s'effectue à partir d'une région d'extrémité axiale de la cavité de moule (41) par au moins un point d'injection (48) dans une paroi frontale de la cavité de moule (41) qui est opposée à l'extrémité libre de l'arbre denté (22).

2. Procédé selon la revendication 1, **caractérisé en ce que** l'injection s'effectue par une pluralité de points d'injection (84) répartis sur la périphérie.

3. Procédé selon l'une quelconque des revendications précédentes, **caractérisé en ce que** l'injection s'effectue dans un espace de coulée (411) de la cavité de moule (41) s'étendant sous forme annulaire du côté frontal autour de l'axe longitudinal (L).

4. Procédé selon la revendication 3, **caractérisé en ce que** l'espace de coulée (412) est formé entre un biseau périphérique au niveau de l'extrémité libre (43) du noyau d'arbre (3) et la paroi frontale de la cavité de moule (41).

5. Dispositif de moulage par injection pour mettre en œuvre le procédé selon l'une quelconque des revendications précédentes, comprenant un outil de moulage par injection (4) avec une cavité de moule (41) qui s'étend dans la direction axiale le long de l'axe longitudinal (L) et qui est réalisée coaxialement entre un noyau d'arbre (3) disposé dans l'outil de moulage par injection (4) et des surfaces de moule (411) qui limitent une denture coaxiale sur une zone de denture (23), et avec au moins un point d'injection (48) pour injecter le plastique en fusion dans la cavité de moule (41) **caractérisé en ce**
**qu'**au moins un point d'injection (48) est réalisé dans une région d'extrémité axiale de la cavité de moule (41) limitant la zone de denture (23).

6. Dispositif de moulage par injection selon la revendication 5, **caractérisé en ce que** l'outil de moulage par injection (4) est réalisé sous forme segmentée avec une pluralité de segments de moule qui s'étendent à chaque fois sur des régions périphériques autour de l'axe longitudinal (L) et qui peuvent être déplacés au moins en partie dans la direction radiale.

7. Dispositif de moulage par injection selon l'une quelconque des revendications précédentes 5 et 6, **caractérisé en ce que** l'outil de moulage par injection (4) présente au moins une paroi frontale limitant dans la direction axiale la cavité de moule (41), laquelle présente au moins un point d'injection (48).

8. Dispositif de moulage par injection selon l'une quelconque des revendications précédentes 5 à 7, **caractérisé en ce que** l'outil de moulage par injection (4) présente des parois frontales limitant dans la direction axiale la cavité de moule (41), au moins l'une des parois frontales pouvant être déplacée dans la direction axiale.

9. Dispositif de moulage par injection selon l'une quelconque des revendications précédentes 5 à 8, **caractérisé en ce que** dans la cavité de moule (41) sont disposés des éléments de positionnement (42a, 42b, 42c, 45a, 45b, 45c) pour le positionnement coaxial d'un noyau d'arbre (3), au moins un élément de positionnement (42a, 42b, 42c, 45a, 45b, 45c) étant de préférence disposé à l'intérieur de la zone de denture (23).

10. Dispositif de moulage par injection selon l'une quelconque des revendications précédentes 5 à 9, **caractérisé en ce qu'**au moins un élément de positionnement (42a, 42b, 42c, 45a, 45b, 45c) est disposé au niveau d'un coulisseau (46) pouvant être déplacé radialement par rapport à l'axe longitudinal (L) de la cavité de moule (41).
